# EUROPEAN PATENT APPLICATION

(11) **EP 4 525 193 A1**
(43) Date of publication of application: **19.03.2025**
(21) Application number: 23851949.0
(22) Date of filing: 10.08.2023
(51) Int. Cl.: H01M 50/531, H01M 50/581, H01M 10/0525

(54) **BATTERY CURRENT COLLECTOR DISC AND BATTERY**

(30) Priority: 10.08.2022 CN 202222096591 U
(71) Applicant: Eve Power Co., Ltd., Jingmen, Hubei 448000 (CN)
(72) Inventor: WANG, Zhiming, Jingmen, Hubei 448000 (CN); LI, Shangyi, Jingmen, Hubei 448000 (CN); HUANG, Liming, Jingmen, Hubei 448000 (CN)
(74) Representative: Berggren Oy
(86) International application number: PCT/CN2023/112292
(87) International publication number: WO 2024/032729

(57) **Abstract**

The present application relates to battery technology and discloses a battery current collector plate and a battery. The battery current collector plate comprises a tab connection portion, a terminal connection portion, and a fuse. The tab connection portion represents an annular structure. The terminal connection portion is disposed at the center of the tab connection portion. An annular gap is formed between a circumferential edge of the terminal connection portion and an inner circumferential edge of the tab connection portion. Two ends of the fuse are respectively connected to the circumferential edge of the terminal connection portion and the inner circumferential edge of the tab connection portion.

## Description

### TECHNICAL FIELD

The present application relates to battery technology, particularly to a battery current collector plate and a battery.

### BACKGROUND

A cylindrical lithium-ion battery typically includes a core inside the battery's case. A positive terminal is connected to positive tabs of the core through a positive current collector plate, and/or a negative terminal is connected to negative tabs of the core through a negative current collector plate, resulting in the positive terminal carrying a positive charge and the negative terminal carrying a negative charge.

### SUMMARY

Currently, a current collector plate of a battery is a sheet-like integrally formed structure. When a short circuit occurs in the battery, the internal structural components of the battery generate significant heat over an extended period due to the high current conditions. It increases an internal pressure of the battery at high temperatures, ultimately leading to the battery exploding or the explosion-proof valve opening.

Therefore, there is an urgent need for a battery current collector plate and battery to address the above-mentioned technical issues.

The purpose of the present application is to propose a battery current collector plate and battery that prevent the battery from exploding or the explosion-proof valve from opening due to a short circuit.

To achieve this purpose, the present application employs the following technical solutions:
In a first aspect, an embodiment of the present application provides a battery current collector plate, comprising:
a tab connection portion configured to electrically connect to one or more tabs of a battery, wherein the tab connection portion represents an annular structure;
a terminal connection portion configured to electrically connect to a terminal of the battery, wherein the terminal connection portion is disposed at a center of the tab connection portion, and an annular gap is formed between a circumferential edge of the terminal connection portion and an inner circumferential edge of the tab connection portion;
one or more fuses, each having two ends respectively connected to the circumferential edge of the terminal connection portion and the inner circumferential edge of the tab connection portion.

In a second aspect, an embodiment of the present application further provides a battery comprising a case, a core, one or more terminals, and the aforementioned battery current collector plate. The battery current collector plate is disposed inside the case, between the core and the terminal, and the tab connection portion of the battery current collector plate is electrically connected to the one or more tabs of the core, and the terminal connection portion of the battery current collector plate is electrically connected to the terminal.

### BENEFICIAL EFFECTS

The battery current collector plate provided by the present application, when used, electrically connects the tab connection portion of the battery current collector plate to the tab of the battery and the terminal connection portion of the battery current collector plate to the terminal of the battery. Due to the formation of an electrical connection between the terminal connection portion and the tab connection portion through the fuse, the terminal is electrified. When a short circuit occurs, the internal temperature of the battery increases, causing the fuse to melt and breaking the electrical connection between the terminal connection portion and the tab connection portion. This prevents the battery from exploding or the explosion-proof valve from opening due to a short circuit, ensuring the battery's safety.

The battery provided by the present application includes a case, core, terminal, and the aforementioned battery current collector plate. The battery current collector plate is positioned inside the case, between the core and the terminal. The tab connection portion of the battery current collector plate is electrically connected to the tab of the core, and the terminal connection portion of the battery current collector plate is electrically connected to the terminal. Due to the formation of an electrical connection between the terminal connection portion and the tab connection portion through the fuse, the terminal is electrified. When a short circuit occurs, the internal temperature of the battery increases, causing the fuse to melt and preventing the battery from exploding or the explosion-proof valve from opening, ensuring the battery's safety.

### BRIEF DESCRIPTION OF THE DRAWINGS

Figure 1 is a partial cross-sectional view of a battery provided by one or more embodiments of the present application.
Figure 2 is a structural diagram of the battery current collector plate provided by one or more embodiments of the present application.
Figure 3 is a rear view of the battery current collector plate provided by one or more embodiments of the present application.
Figure 4 is a front view of the battery current collector plate provided by one or more embodiments of the present application.
Figure 5 is a partial cross-sectional view of section A-A in Figure 4.

In the figures:
10 - Case; 20 - Core; 30 - Terminal;
1 - Tab connection portion; 2 - Terminal connection portion; 3 - Fuse; 4 - Insulation part; 5 - Insulation layer;
11 - Second folding edge; 12 - Tab connection body; 21 - First folding edge; 22 - Terminal connection body.

### DETAILED DESCRIPTION

In the description of the present application, unless otherwise expressly stated and limited, terms such as "connected," "joined," and "fixed" should be broadly interpreted. For example, they can represent fixed connections, detachable connections, or integral connections; they can be mechanical connections or electrical connections; they can be direct connections or indirect connections through an intermediate medium; they can represent communication within two components or the interaction between two components.

In the present application, unless otherwise expressly stated and limited, the phrase "above" or "below" the first feature from the second feature can include direct contact between the first and second features, or contact through another feature between them. Furthermore, the phrase "above," "on top of," or "on" the first feature from the second feature includes both the first feature being directly above the second feature and at an angle above, or it simply means that the first feature's horizontal height is higher than the second feature's height. The phrase "below," "beneath," or "underneath" the first feature from the second feature includes both the first feature being directly below the second feature and at an angle below, or it simply means that the first feature's horizontal height is lower than the second feature's height.

In the description of this embodiment, terms such as "up," "down," "right," and other directional or positional relationships are based on the orientation or position shown in the drawings. They are used for descriptive convenience and simplification of the operation and do not indicate or imply that the indicated device or component must have a specific orientation, be constructed or operated in a specific orientation. Hence, they should not be understood as limitations on the present application. Additionally, terms such as "first" and "second" are used merely to distinguish between descriptions and do not imply any particular meaning.

The following provides further detailed explanations of the technical solutions of the present application in conjunction with the drawings.

In the related art, the current collector plate of a cylindrical lithium-ion battery is a sheet-like integrally formed structure. When a short circuit occurs in the battery, the circuit on the current collector plate remains conductive, maintaining the electrical connection between the tabs of the core and the terminal, and allowing current to continuously flow inside the battery. This results in severe overheating of the internal structural components inside the battery over an extended period due to the high current conditions, leading to the battery exploding or the explosion-proof valve opening.

To address this issue, in this embodiment, a battery is provided in which the internal current collector plate of the battery breaks the circuit when a short circuit occurs, disconnecting the electrical connection between the tabs of the core and the terminal. This effectively interrupts the circuit, preventing severe overheating of the battery and avoiding the battery exploding or the explosion-proof valve opening.

Specifically, the positive and negative terminals are led out from the same end of the battery.

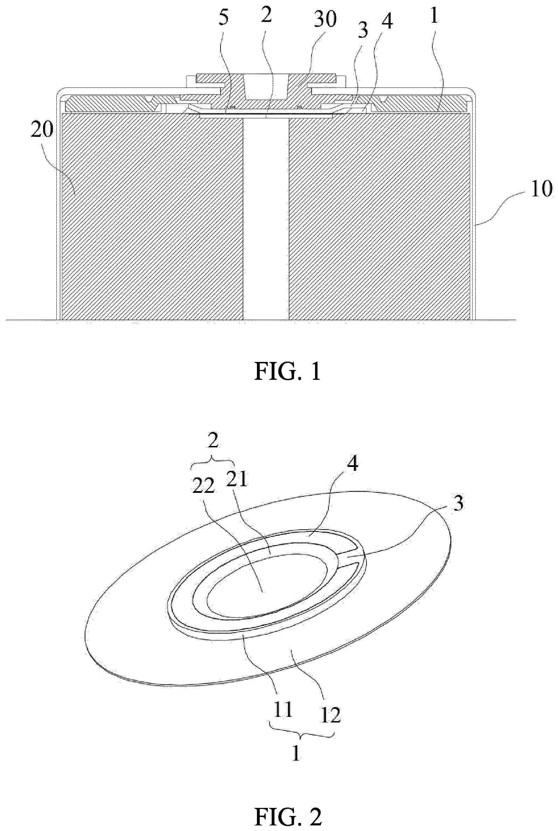

As shown in Figure 1, the battery of this embodiment includes a case 10, a core 20, one or more terminals 30, and one or more battery current collector plates. The battery current collector plate is positioned inside the case 10, between the core 20 and the corresponding terminal 30. One side of the battery current collector plate is electrically connected to the terminal 30, while the other side is electrically connected to the tabs of the core 20.

Optionally, the battery includes one battery current collector plate, with the terminal 30 being the positive terminal. The battery current collector plate is positioned between the positive tabs of the core 20 and the terminal 30, allowing the terminal 30 to carry a positive charge. The negative tabs of the core 20 is connected to the case 10, allowing the case 10 to carry a negative charge.

Optionally, the battery includes one battery current collector plate, with the terminal 30 being the negative terminal. The battery current collector plate is positioned between the negative tabs of the core 20 and the terminal 30, allowing the negative terminal 30 to carry a negative charge. The positive tabs of the core 20 is connected to the case 10, allowing the case 10 to carry a positive charge.

Optionally, the battery includes two battery current collector plates and two terminals 30, with one terminal 30 being the positive terminal and the other terminal 30 being the negative terminal. One battery current collector plate is positioned between the positive tabs of the core 20 and the positive terminal, allowing the positive terminal to carry a positive charge. The other battery current collector plate is positioned between the negative tabs of the core 20 and the negative terminal, allowing the negative terminal to carry a negative charge.

Specifically, as shown in Figure 2, the battery current collector plate provided by this embodiment includes a tab connection portion 1, a terminal connection portion 2, and a fuse 3. The tab connection portion 1 is electrically connected to the tabs of the core 20, and it represents a ring-shaped structure. The terminal connection portion 2 is electrically connected to the terminal 30 of the battery and positioned at the center of the tab connection portion 1, and an annular gap is formed between the circumferential edge of the terminal connection portion 2 and the inner circumferential edge of the tab connection portion 1. The fuse 3 is connected, with its two ends connected to the circumferential edge of the terminal connection portion 2 and the inner circumferential edge of the tab connection portion 1 respectively.

The terminal connection portion 2 and the tab connection portion 1 of the battery current collector plate are electrically connected through the fuse 3, allowing the terminal 30 to carry a charge. When a short circuit occurs, the internal temperature of the battery increases, causing the fuse 3 to melt. This prevents the battery from exploding or the explosion-proof valve from opening due to a short circuit, ensuring the battery's safety. At the same time, the thickness of the battery current collector plate in this embodiment is not increased, meaning that the addition of the fuse 3 does not sacrifice the height of the core 20 to meet the requirements for electrical clearance specified in GB standards.

The battery current collector plate provided by this embodiment also includes an insulation part 4, which is placed in the space formed by the terminal connection portion 2, the tab connection portion 1, and the fuse 3. The insulation part 4 not only enhances the stability of the connection between the terminal connection portion 2 and the tab connection portion 1, but also acts as insulation protection, preventing the melted fuse 3 from accidentally contacting adjacent metal components and re-establishing an electrical connection in the circuit. As shown in Figure 1, the battery current collector plate includes the fuse 3 positioned within a small segment of the annular gap between the terminal connection portion 2 and the tab connection portion 1, and the remaining portion is occupied by the insulation part 4.

Optionally, multiple fuses 3 are installed, distributed evenly around the circumference of the terminal connection portion 2 of the battery current collector plate. In this embodiment, the number of fuses 3 is preferably 1-3.

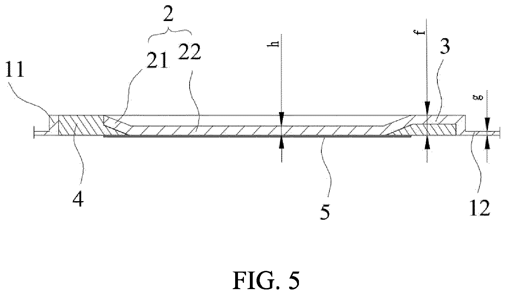

Specifically, as shown in Figure 2 and Figure 5, the terminal connection portion 2 forms a first folding edge 21 by having its outer circumferential edge bent toward a side away from the tabs. The tab connection portion 1 forms a second folding edge 11 by having its inner circumferential edge bent toward the side away from the tabs. The fuse 3 is connected between the first folding edge 21 and the second folding edge 11, and the space defined by the first and second folding edges 21, 22 and the fuse 3 forms a space where the insulation part 4 is located. The fuse 3 is connected to the end of the first folding edge 21 and the end of the second folding edge 11. Moreover, the arrangement of the first folding edge 21 and the second folding edge 11 allows the insulation part 4 to be positioned on the side of the fuse 3 facing the core 20, further preventing the melted fuse 3 from accidentally contacting adjacent metal components and re-establishing an electrical connection in the circuit.

As shown in Figure 2 and Figure 5, the terminal connection portion 2 includes a terminal connection body 22, and the first folding edge 21 is connected to the outer circumferential edge of the terminal connection body 22. The terminal connection body 22 is electrically connected to the terminal. The tab connection portion 1 includes a ring-shaped tab connection body 12, and the second folding edge 11 is connected to the inner circumferential edge of the tab connection body 12. The tab connection body 12 is electrically connected to the tabs. In this embodiment, the terminal connection body 22 and the first folding edge 21 are integrally formed, and the tab connection body 12 and the second folding edge 11 are integrally formed. The terminal connection body 22 is welded to the end of the terminal 30, and the tab connection body 12 is welded to the tabs of the core 20.

As shown in Figure 5, on the side facing the tabs, the surface of the tab connection portion 1, the surface of the terminal connection portion 2, and the surface of the insulation part 4 lie in the same plane. It can be understood that the surface of the tab connection portion 1 facing the tabs is the surface of the tab connection body 12 facing the tabs, and the surface of the terminal connection portion 2 facing the tabs is the surface of the terminal connection body 22 facing the tabs. With this arrangement, a rational layout of the internal components of the case 10 is ensured. Besides, the insulation part 4 can be made as thick as possible to ensure the stability of the connection between the terminal connection portion 2 and the tab connection portion 1. In this embodiment, the fuse 3 is connected to the edge boundaries of the first folding edge 21 and the second folding edge 11.

In more detail, as shown in Figure 5, on the side away from the tabs, the end face of the second folding edge 11, the surface of the insulation part 4, and the surface of the fuse 3 are flush. With this arrangement, the rational layout of the internal components of the case 10 is further ensured, and the insulation part 4 can be made as thick as possible to ensure the stability of the connection between the terminal connection portion 2 and the tab connection portion 1.

In this embodiment, the insulation part 4 is made of high-temperature resistant plastic. The high-temperature resistant plastic is injected into the space formed by the first folding edge 21, the second folding edge 11, and the fuse 3 to form the insulation part 4.

Optionally, the high-temperature resistant plastic is made of polypropylene (PP), polyethylene terephthalate (PET), or polyimide (PI). It can be any one of these materials or a combination of two or three of them.

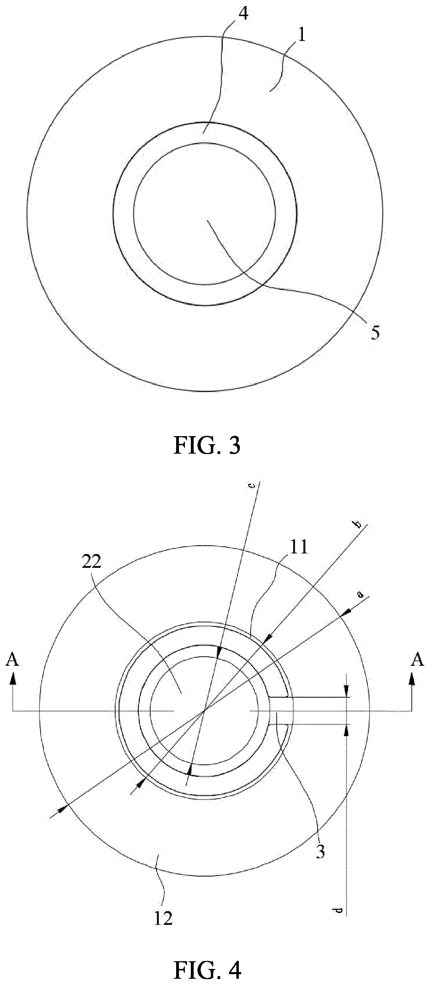

As shown in Figure 3 and Figure 5, the battery current collector plate provided by this embodiment also includes several insulation layers 5. Multiple layers of the insulation layers 5 are overlapped and placed on the side of the terminal connection portion 2 away from the terminal 30. The outermost insulation layer 5 is in contact with the end of the core 20 and is made of brown high-temperature resistant glue. The insulation layers 5 prevent the tabs of the core 20 from contact with the terminal connection portion 2, ensuring the fuse 3 plays a protective role. In this embodiment, two layers of insulation layers 5 are used.

Preferably, the terminal connection body 22 represents an annular structure, and the first folding edge 21 is an annular structure. The orthographic projection of the first folding edge 21 onto the plane where the insulation layer 5 is located does not exceed the boundary of the insulation layer 5. In other words, the insulation layer 5 completely insulates the terminal connection portion 2 from the core 20, further ensuring the protective function of the fuse 3. As shown in Figure 1, in this case, the center of the insulation layer 5 contacts the side of the terminal connection body 22 away from the terminal 30, and the edge portion of the insulation layer 5 contacts the side of the insulation part 4 away from the terminal 30.

Specifically, as shown in Figure 4 and Figure 5, the outer diameter a of the tab connection body 12 is in the range of: 18mm≤a≤50mm.

The diameter c of the terminal connection body 22 is in the range of: 0≤c≤0.5a.

The width d of the fuse 3 is in the range of: 0<d≤0.6c.

The outer diameter b of the second folding edge 11 is in the range of: 0.2a<b≤0.8a.

The thickness f of the fuse 3 in the battery current collector plate is in the range of: 0<f≤2mm.

The thickness g of the tab connection body 12 is in the range of: 0< g≤1mm.

The thickness h of the terminal connection body 22 is in the range of: 0 <h≤2mm. In this embodiment, the thicknesses of the fuse 3, the first folding edge 21, and the second folding edge 11 are all equal to the thickness of the terminal connection body 22.

The specific design process of the fuse 3 in the battery current collector plate provided by this embodiment is as follows:
1. calculate the current-carrying capacity of the current collector plate material and the temperature rise under a short-circuit condition;
2. based on the results of the calculation in step 1, determine the cross-sectional area of the fuse 3, thereby determining the width d of the fuse 3, so that the fuse 3 can melt under certain short-circuit conditions and ensure the current-carrying capacity of the entire battery current collector plate under normal operating conditions;
3. use electromagnetic-thermal simulation to determine the design structure and position of the fuse 3.
4. validate the reasonableness of design of the fuse 3 through battery sample preparation and safety testing.

Clearly, the embodiments provided above are only given for illustrative purposes to explain the present application and should not be understood as limiting the embodiments of the present application. Ordinary skilled persons in the relevant field can make various changes and modifications in different forms based on the descriptions above. It is impossible and unnecessary to exhaustively enumerate all embodiment variations. Any modifications, equivalents, replacements, and improvements made within the scope of the spirit and principles of the present application should be included within the protection scope defined by the claims of the present application.

## Claims

1. A battery current collector plate comprising:
a tab connection portion configured to electrically connect to one or more tabs of a battery, wherein the tab connection portion represents an annular structure;
a terminal connection portion configured to electrically connect to a terminal of the battery, wherein the terminal connection portion is disposed at a center of the tab connection portion, and an annular gap is formed between a circumferential edge of the terminal connection portion and an inner circumferential edge of the tab connection portion;
one or more fuses, each having two ends respectively connected to the circumferential edge of the terminal connection portion and the inner circumferential edge of the tab connection portion.

2. The battery current collector plate according to claim 1, further comprising an insulation part disposed in a space formed by the terminal connection portion, the tab connection portion, and each fuse.

3. The battery current collector plate according to claim 2, **characterized in that** an outer circumferential edge of the terminal connection portion is bent toward a side facing away from the one or more tabs to form a first folding edge , and an inner circumferential edge of the tab connection portion is bent toward the side facing away from the one or more tabs to form a second folding edge, with each fuse connected between the first folding edge and the second folding edge, and the insulation part is disposed in a space formed by the first folding edge, the second folding edge, and each fuse.

4. The battery current collector plate according to claim 3, **characterized in that** on a side facing the one or more tabs, a surface of the tab connection portion, a surface of the terminal connection portion, and a surface of the insulation part are coplanar.

5. The battery current collector plate according to claim 3, **characterized in that** on the side facing away from the one or more tabs, an end face of the second folding edge, a surface of the insulation part, and a surface of each fuse are flush.

6. The battery current collector plate according to claim 3, **characterized in that** the terminal connection portion comprises a terminal connection body, and the first folding edge is connected to an outer circumferential edge of the terminal connection body, the terminal connection body is configured to electrically connect to the terminal; and
the tab connection portion comprises an annular tab connection body, and the second folding edge is connected to an inner circumferential edge of the tab connection body.

7. The battery current collector plate according to claim 6, **characterized in that** an outer diameter a of the tab connection body is in a range of 18mm to50mm, a diameter c of the terminal connection body is in a range of 0 to 0.5a, and a width d of each fuse is in a range of 0 to 0.6c.

8. The battery current collector plate according to any of claims 1-7, further comprising a plurality of insulation layers overlapped and disposed on a side of the terminal connection portion away from the terminal.

9. The battery current collector plate according to any of claims 1-7, **characterized in that** a plurality of the fuses are evenly disposed around a circumference of the terminal connection portion.

10. The battery current collector plate according to any of claims 2-7, **characterized in that** the insulation part is made of high-temperature resistant plastic.

11. The battery current collector plate according to claim 10, **characterized in that** the high-temperature resistant plastic is polypropylene (PP), polyethylene terephthalate (PET), or polyimide (PI).

12. A battery comprising a case, a core, one or more terminals, and a battery current collector plate according to any of claims 1-11, **characterized in that** the battery current collector plate is disposed inside the case, between the core and the terminal, and the tab connection portion of the battery current collector plate is electrically connected to the one or more tabs of the core, and the terminal connection portion of the battery current collector plate is electrically connected to the terminal.
